# EUROPÄISCHE PATENTSCHRIFT

(11) **EP 0 547 081 B1**
(45) Veröffentlichungstag und Bekanntmachung des Hinweises auf die Patenterteilung: **29.11.1995**
(21) Anmeldenummer: 91914969.0
(22) Anmeldetag: 27.08.1991
(51) Int. Cl.: G01N 23/223

(54) **BESTIMMUNG DER KONZENTRATION VON ELEMENTEN IM OBERFLÄCHENBEREICH EINES OBJEKTS**
PROCESS AND DEVICE FOR THE ANALYSIS AND DETERMINATION OF THE CONCENTRATION OF ELEMENTS IN THE SURFACE REGION OF OBJECTS
PROCEDE ET DISPOSITIF D'ANALYSE ET DE DETERMINATION DE LA CONCENTRATION D'ELEMENTS DANS DES ZONES SUPERFICIELLES D'OBJETS

(30) Priorität: 05.09.1990 DE 4028043
(43) Veröffentlichungstag der Anmeldung: 23.06.1993
(73) Patentinhaber: GKSS-FORSCHUNGSZENTRUM GEESTHACHT GMBH, D-21502 Geesthacht (DE)
(72) Erfinder: BORMANN, Rüdiger, D-2000 Hamburg 60 (DE); SCHWENKE, Heinrich, D-2058 Escheburg (DE)
(74) Vertreter: Niedmers, Ole, Dipl.-Phys.
(86) Internationale Anmeldenummer: DE9100677
(87) Internationale Veröffentlichungsnummer: WO9204623

(56) Entgegenhaltungen:
- EP-A- 0 235 640
- DE-A- 3 625 700
- US-A- 4 169 228
- TECHNISCHES MESSEN TM. volume 54, No. 9, 1987, München DE, pages 330 - 336; H.J. DUDEK: "Mikroanalyse und Tiefenprofilanalyse mit der Auger-Elektronen-Spektroskopie" see page 335, left-hand column, paragraph "Tiefenprofilanalyse" - right-hand column, line 4, see figure 10
- SIEMENS FORSCHUNGS- UND ENTWICKLUNGSBERICHTE, volume 14, No. 4, 1985, BERLIN DE, pages 201 - 207; R.V. CRIEGERN ET AL.: "Analyse von Oberflächenschichten und Grenzflächen mit der Augerelektronen-Spektrometrie /AES)" see page 203, right-hand column, last paragraph - page 204, left-hand column, line 6, figure 5
- MECHANIQUE, volume 58, No. 306-307, June-July 1975, PARIS FR, pages 40-44; S. KOMIYA et al.: "Sputter etching and Auger electron Spectroscopy of metal surfaces", see page 41, left-hand column, paragraph 2 - right-hand column, line 6; figure 3
- REVIEW OF SCIENTIFIC INSTRUMENTS, volume 38, No. 10, October 1987, NEW YORK US, page 1523; J.P. SMITH AT AL.: "Automatic stepping shutter system for preparing standard thin films for electron microprobe analysis" see page 1523, paragraph 2 - paragraph 3, see figure 1
- REVIEW OF SCIENTIFIC INSTRUMENTS, volume 43, No. 4, April 1972, NEW YORK US, pages 697-698; C.F. KOEHLER: "A vacuum atmosphere linear motion device for the preparation of samples free of surface contamination" see page 697 - page 698, left-hand column

## Beschreibung

Die Erfindung betrifft ein Verfahren zur Analyse und Bestimmung der Konzentration von Elementen im Oberflächenbereich von im wesentlichen ebenen Objekten mit geringer Rauhigkeit mittels der Totalreflexions-Röntgenfluoreszenzanalysemethode, sowie eine Vorrichtung zur Ausführung eines derartigen Verfahrens.

Ein Verfahren dieser Art ist bekannt (US-A-4 169 228).

Grundsätzlich gilt, daß die Messung von Tiefenprofilen, d.h. die Bestimmung der Konzentration von Elementen in Abhängigkeit vom Abstand zur Oberfläche oder auch der Nachweis einzelner Elemente in diesem Bereich eine wichtige Aufgabe in der Analytik von Oberflächen ist. Es hat sich gezeigt, daß insbesondere die sogenannte Totalreflexions-Röntgenfluoreszenzanalysemethode hervorragend geeignet ist, im oberflächennahen Bereich zur Konzentrationsbestimmung von Elementen sowie zum Nachweis der Elemente herangezogen zu werden. Aufgrund physikalischer Gesetzmäßigkeiten ist die Totalreflexions-Röntgenfluoreszenzanalysemethode bei Einfallswinkeln der primären Röntgenstrahlung im Milliradbereich aufgrund ihrer geringen Eindringtiefe von wenigen Nanometern geeignet, zur Analyse der ersten Atomlagen in den Oberflächen benutzt zu werden. Vielfach ist jedoch eine Konzentrationsbestimmung bzw. ein Nachweis von Elementen nötig, die bzw. der über die oben erwähnten wenigen Nanometer in der Tiefe hinausgehen bzw. hinausgeht, d.h. es sind insbesondere bei technischen Oberflächen auch Tiefenverteilungen der Elementkonzentration bis zu einer Tiefe von ca. 1 »m erwünscht.

Grundsätzlich kann zwar die Totalreflexions-Röntgenfluoreszenzanalysemethode durch Erhöhung des Einfallswinkels auch zur Ermittlung tieferer Schichten, bezogen auf eine Oberfläche, herangezogen werden, jedoch wird dann die Quantifizierung der Meßergebnisse in zweifacher Hinsicht erschwert. Zum einen steigt nämlich im Bereich von 10 - 100 nm die Eindringtiefe der Röntgenstrahlung derart stark mit dem Einfallswinkel an, daß schon kleinste Winkeländerungen eine sprunghafte Veränderung der Eindringtiefe bewirken, ein Effekt, der meßtechnisch praktisch nicht mehr beherrschbar ist, und zum anderen geht die Tiefenauflösung verloren, weil sich die Fluoreszenzstrahlung der Deckschichten der Strahlung der unteren Schichten überlagert, so daß die Lokalisierbarkeit der Atome und/oder Moleküle mit der Tiefe, bezogen auf die Oberfläche, drastisch abnimmt.

Zusammenfassend kann gesagt werden, daß der Einsatz der an sich hervorragende Meßergebnisse liefernden Totalreflexions-Röntgenfluoreszenzanalysemethode um so problematischer wird, je tiefer ein qualitativer und quantitativer Nachweis von Atomen und/oder Molekülen, bezogen auf die Oberfläche eines Objekts, gewünscht wird.

Aus MECANIQUE, Bd. 58, Nr. 306 - 307, Juni - Juli 1975, Paris, FR, Seiten 40 - 44; S. Komiya et al.: "Sputter etching and Auger electron Spectroscopy of metal surfaces" ist ein Verfahren bekannt, mit dem Tiefenprofile durch Kombination von Auger-Spektroskopie mit Kratersputtern bekannt, d.h. es entstehen bei dem dort beschriebenen Verfahren Krater mit einem Durchmesser von 14 mm, jedoch keine planen, für die Totalreflexions-Röntgenfluoreszenzanalysemethode geeignete Flächen.

Es ist Aufgabe der vorliegenden Erfindung, ein Verfahren und eine Vorrichtung zu schaffen, mit der die hervorragenden Nachweisergebnisse, wie sie grundsätzlich von der Totalreflexions-Röntgenfluoreszenzanalyemethode geliefert werden, auch für den qualitativen und quantitativen Nachweis von Elementen (Atomen und/oder Molekülen) möglich sind, die tiefer, bezogen auf die Oberfläche eines Objekts, angeordnet sind, als sie bisher mit der Totalreflexions-Röntgenfluoreszenzanalysemethode zu ermitteln waren, wobei es Aufgabe einer Vorrichtung für ein derartiges Verfahrens zusätzlich sein soll, daß diese einen verhältnismäßig einfachen Aufbau hat und Nachteile, wie sie bisher bei anderen Vorrichtungen zum Nachweis der Elemente in tiefen Schichten beobachtet wurden, nicht hat, d.h. eine Vorrichtung, die beispielsweise kein besonderes Hochvakuum benötigt, wobei Verfahren und Vorrichtung einfach und kostengünstig ausführbar und bereitstellbar sein sollen und auch bei der Messung tiefer Schichten hervorragende Meßergebnisse geliefert werden.

Gelöst wird die Aufgabe gemäß dem erfindungsgemäßen Verfahren dadurch, daß
eine äußere Schicht des Objekts unter Anwendung eines Zerstäubungs- oder Verdampfungsverfahrens schichtweise flächenhaft abgetragen wird,
daß somit das um die Schicht abgetragene Objekt unmittelbar dem Abtragvorgang nachfolgend an einen Meßort überführt wird und dort mittels der Totalreflexions-Röntgenfluoreszenzanalysemethode der Abtragbereich der Objektoberfläche untersucht wird, und
die vorangehenden Verfahrensschritte entsprechend dem gewünschten Tiefenbereich des Objekts wiederholt werden.

Der Vorteil des erfindungsgemäßen Verfahrens besteht im wesentlichen darin, daß die für die Totalreflexions-Röntgenfluoreszenzanalyemethode typischen hervorragenden Quantifizierbarkeiten der Meßergebnisse auch bei, bezogen auf die Oberfläche des Objekts, tiefer gelegene Elemente herangezogen werden können, da durch das Verfahren faktisch Schicht für Schicht abgetragen wird und die Anwendung der Totalreflexions-Röntgenfluoreszenzanalysemethode, die unmittelbar dem Abtragvorgang folgt, lediglich auf den Tiefenbereich beschränkt zu werden braucht, indem sie ihre naturgemäß hohen physikalischen Eigenschaften zeigt, wobei das Verfahren grundsätzlich auch sehr einfach durchgeführt werden kann und somit kostengünstig ist, zumal die Ausführung des Verfahrens kein besonderes Hochvakuum, anders als bei anderen spektrometischen Nachweismethoden, erforderlich ist.

Vorteilhaft ist es, den Abtragsvorgang gemäß dem ersten Verfahrensschritt lediglich in einem evakuierten Volumen durchzuführen, wobei es technisch wenig aufwendig ist, im Vergleich zu bisher erforderlichem Hochvakuum für derartige Messungen mittels anderer Verfahren, lediglich einfache Vakuumbedingungen herzustellen.

Vorteilhafterweise ist es dabei lediglich erforderlich, das Vakuum unter 10⁻⁵ bar zu halten.

Der Verfahrensablauf kann vorteilhafterweise derart vonstatten gehen, daß mittels des Abtragverfahrens eine Oberflächenschicht des Objekts abgetragen wird und dann das Objekt mit dem abgetragenen Bereich der Oberfläche unmittelbar an den Meßort überführt wird, bei dem die Analyse mittels der Totalreflexions-Röntgenfluoreszenzanalysemethode erfolgt, und zwar auf bekannte Weise. Der Abtragvorgang und die Überführung an den Meßort und die dortige Analysemethode kann grundsätzlich auf beliebige Weise erfolgen, d.h. grundsätzlich auch nicht aufeinander abgestimmt und grundsätzlich manuell gesteuert. Es hat sich jedoch als vorteilhaft erwiesen, den zeitlichen Abstand zwischen dem ersten Verfahrensschritt und und dem zweiten Verfahrensschritt vorbestimmbar und einstellbar zu machen, so daß vorbestimmte Verfahrenssequenzen möglich sind, um gute Reproduzierbarkeiten bei der Anwendung des Verfahrens zu erreichen.

Die erfindungsgemäße Vorrichtung ist zur Lösung der Aufgabe gekennzeichnet durch eine Einrichtung zum Zerstäuben oder Verdampfen Schicht für Schicht des Materials des Objekts und das zur Abtrageinrichtung unmittelbar in einem Abstand benachbart an einem Meßort angeordnete Totalreflexions-Röntgenfluoreszenzanalysespektrometer, wobei der schichtartig abgetragene Bereich des Objekts nach dessen Verschiebung an den Meßort in sich wiederholender Weise untersuchbar ist.

Der Vorteil der erfindungsgemäßen Vorrichtung liegt im wesentlichen in ihrem sehr einfachen und kostengünstig realisierbaren Aufbau, da im Stand der Technik an sich bekannte, im Handel verfügbare Totalreflexions-Röntgenfluoreszenzanalysespektrometer verwendet werden können, ebenso wie im Handel erhältliche Abtrageinrichtungen, wie sie beispielsweise im Zuge von Oberflächenbeschichtungseinrichtungen mit Hartstoffen und dgl. verwendet werden, beispielsweise Vorrichtungen zur Herstellung nach dem PVD- bzw. CVD-Verfahren (physical vapour deposition, chemical vapour deposition), sowie in der besseren Quantifizierbarkeit der Elementanalyse in Abhängigkeit vom Abstand von der Probenoberfläche.

Um sicherzustellen, daß der Abtragvorgang qualitativ und/oder quantitativ gesteuert durchgeführt werden kann, um hochgenau reproduzierbare Meßergebnisse zu erzielen, wird der durch die Abtrageinrichtung vorteilhafterweise bewirkte Abtragvorgang des Objektmaterials durch eine Blendeinrichtung qualitativ und/oder quantitativ gesteuert, wobei die Blendeinrichtung auch gleichzeitig als Blendeinrichtung der vom Objekt zurückgestreuten Fluoreszenzstrahlung, die auf einen Strahlendetektor fällt, benutzt werden kann.

Wenigstens die Abtrageinrichtung weist ein geeignet ausgebildetes, evakuierbares Volumen auf, das das Objekt während des Abtragvorganges aufnimmt.

Um reproduzierbare Meßsequenzen erhalten zu können, erfolgt vorteilhafterweise die Verschiebung des Objekts zwischen Meßort und Abtragort angetrieben und gesteuert.

Die Erfindung wird nun unter Bezugnahme auf die nachfolgenden schematischen Zeichnungen anhand eines Ausführungsbeispieles beschrieben. Darin zeigen:

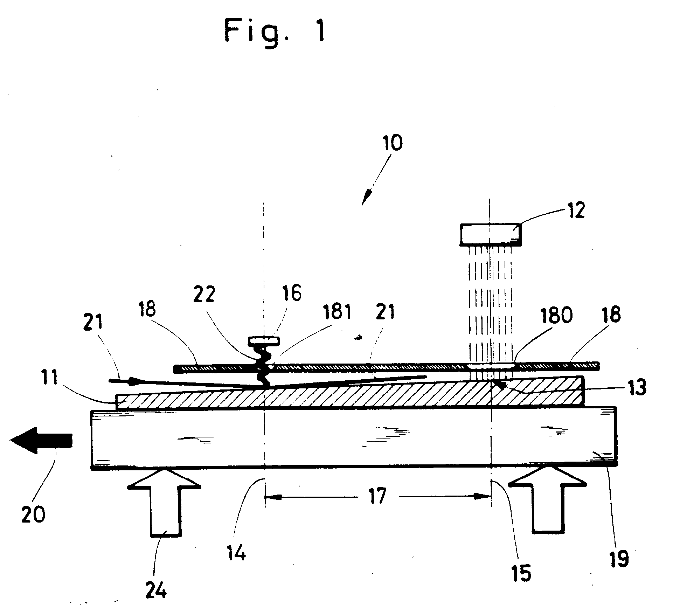

- Fig. 1: den prinzipiellen Aufbau der Vorrichtung in der Ansicht von der Seite,

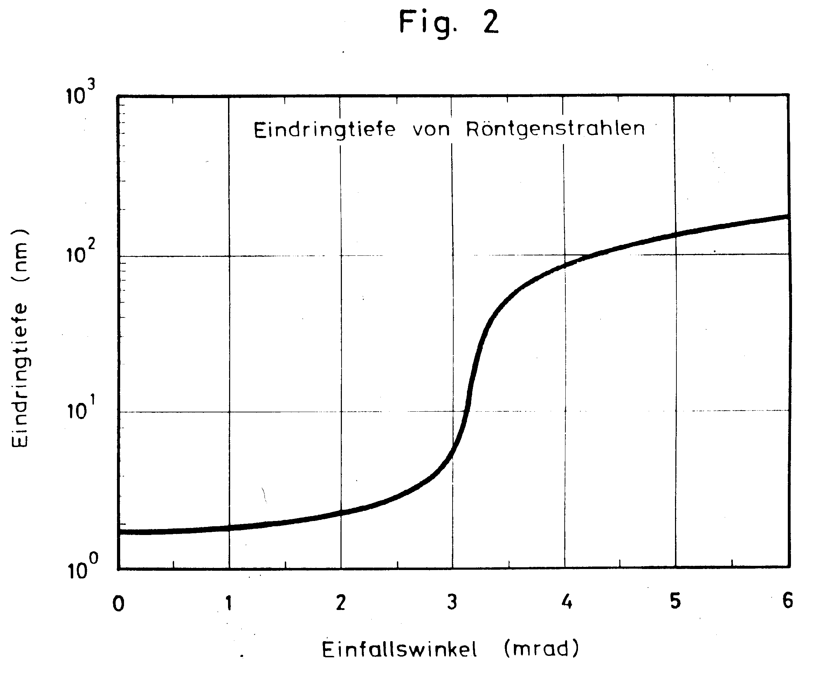

- Fig. 2: die Abhängigkeit der Eindringtiefe der primären Röntgenstrahlung des Totalreflexions-Röntgenfluoreszenzanalysespektrometers in Abhängigkeit vom Einfallswinkel auf das Objekt und
- Fig. 3: den Verlauf der Fluoreszenzstrahlung der Elemente Tantal und Silizium gemäß einer Computersimulation des erfindungsgemäßen Verfahrens, angewendet auf ein System alternierender Schichten der Elemente Tantal und Silizium mit einer Schichtdicke von 10 nm.

Die Vorrichtung 10 besteht im wesentlichen aus einer Positioniereinrichtung 19, einem Totalreflexions-Röntgenfluoreszenzanalysespektrometer 16 sowie einer Abtrageinrichtung 12. Das Totalreflexions-Röntgenfluoreszenzanalysespektrometer 16 und die Abtrageinrichtung 12 sind auf vorbestimmte Weise voneinander beabstandet 17, wobei aus Vereinfachungsgründen hier die Achse durch das Totalreflexions-Röntgenfluoreszenzanalysespektrometer 16 mit 14 bezeichnet wird und die Achse durch die Abtrageinrichtung 12 mit dem Abtragort 15. Der Abstand zwischen Meßort 14 und Abtragort 15 bildet den Abstand 17.

Auf die Positioniereinrichtung 19 wird auf bekannte Weise ein zu untersuchendes Objekt 11 aufgelegt und entsprechend dem Pfeil 20 geeignet unter dem Meßort 14 und dem Abtragort 15 positioniert, was gleichermaßen für die vertikale Ausrichtung des Objekts 11 über die Abtrageinrichtung 12 mittels einer Bewegung gemäß Pfeil 24 bewirkt wird.

Die Abtrageinrichtung 12, die beispielsweise nach dem Prinzip des Abtrags mittels Strahlung oder nach dem Prinzips des Abtrags mittels Zerstäubung des Oberflächenmaterials 13 arbeitet, ist eine Einrichtung, die nach bekannten Abtragprinzipien arbeitet und deshalb an dieser Stelle nicht weiter erörtert wird. Am Abtragort 15 vom wird Objekt 11 das Objektmaterial 13 abgetragen. Die Menge des Objektmaterials 13 wird unter anderem qualitativ und quantitativ durch eine Blendeinrichtung 18 gesteuert, die eine Öffnung 180 aufweist, durch die das Abtragmedium, beispielsweise eine Strahlung, geeignet hindurchgeführt werden kann. Die Blendeinrichtung 18 weist noch eine zweite Öffnung 181 auf, die, ebenfalls als Blende wirkend, die vom Objekt (11) ausgehende Fluoreszenzstrahlung 22 geeignet gesteuert bis zu einem Röntgendetektor 16, der Teil des Totalreflexions-Röntgenfluoreszenzanalysespektrometers ist, hindurchläßt.

Obwohl grundsätzlich der Aufbau und die Wirkungsweise eines Totalreflexions-Röntgenfluoreszenzanalysespektrometers bekannt ist, sei kurz auf dieses zum besseren Verständnis eingegangen. Entsprechend der schon erwähnten Pfeile 20, 24 wird das Objekt 11 an einer ausgewählten Stelle am Meßort 14 positioniert, wobei das Objekt 11 mittels einer von einer hier nicht dargestellten Röntgenstrahlungsquelle herrührenden Primärstrahlung 21 beaufschlagt wird, und zwar unter Totalreflexionsbedingungen. Die sich infolgedessen ausbildende Fluoreszenzstrahlung 22, die durch die Öffnung 181 der Blendeinrichtung 18 hindurchtritt, fällt dabei auf einen Röntgendetektor 23, der die Verteilung der Fluoreszenzstrahlung 22 der Schicht, die momentan am Meßort 14 angetroffen wird, mißt. Der Meßort 14 oder der Abtragort 15 oder beide Ort 14, 15 können von einem hier nicht dargestellten, evakuierten Volumen umgeben sein, um die Präzision der Konzentrationsbestimmung der Elemente des Objekts sowie die Güte des Abtragvorgangs am Abtragort 15 erheblich zu verbessern.

Das mit der erfindungsgemäßen Vorrichtung 10 durchführbare erfindungsgemäße Verfahren ermöglicht ein quasi gleichzeitiges Messen und Abtragen an den durch den Abstand 17 getrennten Orten 14, 15 oder ein alternierendes Abtragen und Messen an einer beliebigen Position des Objekts 11. Dadurch können Tiefenprofile mit einer Tiefenauflösung gemessen werden, die praktisch nur noch durch die kleinste abtragbare Menge an Objektmaterial 13 begrenzt ist. Durch hier nicht dargestellte Einrichtungen kann im übrigen auch der Abtragvorgang und der Meßvorgang geeignet gesteuert und aufeinander abgestimmt ausgeführt werden, so daß sogar reihenweise, hochgenau reproduzierbare Meßparameter für jedes zu untersuchende Objekt 11 möglich sind.

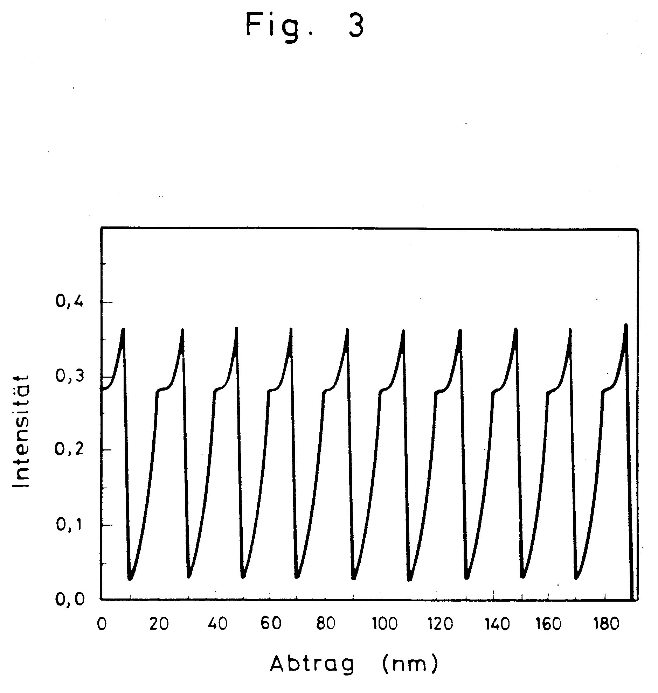

Aus Fig. 3 ist der Verlauf der Fluoreszenzstrahlung 22 der Elemente Tantal und Silizium aus einer Computersimulation des erfindungsgemäßen Verfahrens, angewendet auf ein System alternierender Schichten der Elemente Tantal und Silizium mit einer Schichtdicke von 10 nm ersichtlich. Die hohe Trennschärfe des Verfahrens ist dabei deutlich zu erkennen. Aufgrund der ausgeprägten Oberflächenspezifität der Totalreflexions-Röntgenfluoreszenzanalysemethode wird eine Tiefenauflösung erreicht, die den besten aus der Literatur bekannten Beispielen entspricht, vgl. Phys. B1 45 (1980) Nr. 11, S. 837.

### Bezugszeichenliste

- 10: Vorrichtung
- 11: Objekt
- 12: Abtrageinrichtung
- 13: Objektmaterial
- 14: Meßort
- 15: Abtragort
- 16: Röntgendetektor
- 17: Abstand
- 18: Blendeinrichtung
- 180: Öffnung
- 181: Öffnung
- 19: Positioniereinrichtung
- 20: Pfeil
- 21: Primärstrahlen
- 22: Fluoreszenzstrahlen
- 24: Pfeil

## Patentansprüche

1. Verfahren zur Analyse und Bestimmung der Konzentration von Elementen im Oberflächenbereich von im wesentlichen ebenen Objekten mit geringer Rauhigkeit mittels der Totalrefelxions-Röntgenfluoreszenzanalysemethode, dadurch gekennzeichnet, daß
a. eine äußere Schicht des Objekts unter Anwendung eines Zerstäubungs- oder Verdampfungsverfahrens schichtweise flächenhaft abgetragen wird,
b. daß somit das um die Schicht abgetragene Objekt unmittelbar dem Abtragsvorgang nachfolgend an einen Meßort überführt wird und dort mittels der Totalreflexions-Röntgenfluoreszenzanalysemethode der Abtragbereich der Objektoberfläche untersucht wird, und
c. die Verfahrensschritte a. und b. entsprechend dem gewünschten Tiefenbereich des Objekts wiederholt werden.

2. Verfahren nach Anspruch 1, dadurch gekennzeichnet, daß wenigstens der Abtragvorgang gemäß Verfahrensschritt a. in einem evakuierten Volumen erfolgt.

3. Verfahren nach einem oder beiden der Ansprüche 1 oder 2, dadurch gekennzeichnet, daß dieses in einem bis zu 10⁻⁵ bar evakuierten Volumen abläuft.

4. Verfahren nach einem oder mehreren der Ansprüche 1 bis 3, dadurch gekennzeichnet, daß der zeitliche Abstand zwischen Verfahrensschritt a. und Verfahrensschritt b. vorbestimmbar und einstellbar ist.

5. Vorrichtung (10) zur Analyse und Bestimmung der Konzentration von Elementen im Oberflächenbereich von im wesentlichen ebenen Objekten (11) mittels eines Totalreflexions-Röntgenfluoreszenzanalysespektrometers (16), zur Ausführung des Verfahrens nach Anspruch 1, gekennzeichnet durch eine Einrichtung (12) zum Zerstäuben oder Verdampfen (Abtrageinrichtung) des Materials (13) des Objekts (11) Schicht für Schicht und durch das zur Abtrageinrichtung (12) unmittelbar in einem Abstand (17) benachbart an einem Meßort angeordnete Totalreflexions-Röntgenfluoreszenzanalysespektrometer (16), wobei der schichtartig abgetragene Bereich des Objekts (11) nach dessen Verschiebung an den Meßort (14) in sich wiederholender Weise untersuchbar ist.

6. Vorrichtung nach Anspruch 5, dadurch gekennzeichnet, daß der durch die Abtrageinrichtung (12) bewirkte Abtragvorgang des Objektmaterials (13) durch eine Blendeinrichtung (18) qualitativ und/oder quantitativ steuerbar ist.

7. Vorrichtung nach einem oder beiden der Ansprüche 5 oder 6, dadurch gekennzeichnet, daß wenigstens die Abtrageinrichtung (12) ein evakuierbares Volumen aufweist, das das Objekt (11) während des Abtragvorganges aufnimmt.

8. Vorrichtung nach einem oder mehreren der Ansprüche 5 bis 7, dadurch gekennzeichnet, daß die Verschiebung des Objektes (11) zwischen Meßort (14) und Abtragort (15) angetrieben und gesteuert erfolgt.

## Claims

1. Process for the analysis and determination of the concentration of elements in the surface region of substantially planar objects with low roughness by means of the total reflexion Röntgen fluorescence analysis method, characterized in that
a. an external layer of the object is stripped away laterally in stages using a nebulization or vaporization process,
b. following the removal of the layer, the object is immediately transferred to a measuring point where the stripped area of the object surface is examined using the total reflexion Röntgen fluorescence analysis method, and
c. the process steps a. and b. are repeated in accordance with the desired depth range for the object.

2. Process according to Claim 1, characterized in that at least the stripping operation according to process step a. is carried out in an evacuated space.

3. Process according to one or both of Claims 1 or 2, characterized in that this occurs in a space evacuated to up to 10⁻⁵ bar.

4. Process according to one or more of Claims 1 to 3, characterized in that the time interval between process step a. and process step b. may be predetermined and adjusted.

5. Device (10) for the analysis and determination of the concentration of elements in the surface region of substantially planar objects (11) using a total reflexion Röntgen fluorescence analysis spectrometer (16) for carrying out the process according to Claim 1, characterized by equipment (12) (stripping equipment) for nebulizing or vaporizing the material (13) of the object (11) layer by layer and by the total reflexion Röntgen fluorescence analysis spectrometer (16) positioned at a measuring point located immediately adjacent to the stripping equipment (12) at a distance (17), whereby the region of the object (11) stripped in layers may be examined in a repeated fashion by displacing it to the measuring point (14).

6. Device according to Claim 5, characterized in that the stripping action of the object material (13) produced by the stripping equipment (12) may be qualitatively and/or quantitatively regulated by means of aperture equipment (18).

7. Device according to one or both of Claims 5 or 6, characterized in that at least the stripping equipment (12) presents a space which may be evacuated and which is occupied by the object (11) during the stripping operation.

8. Device according to one or more of Claims 5 to 7, characterized in that the displacement of the object (11) between the measuring point (14) and the stripping point (15) is achieved by means of a controlled drive.

## Revendications

1. Procédé pour analyser et déterminer la concentration d'éléments dans la zone superficielle d'objets essentiellement plats présentant une faible rugosité, au moyen du procédé d'analyse à fluorescence X à réflexion totale, caractérisé en ce
a. qu'élimine une couche extérieure de l'objet sous la forme d'une pellicule sur une certaine étendue moyennant l'utilisation d'un procédé de pulvérisation ou d'évaporation, et
b. qu'on amène ensuite l'objet, dont la couche a été ainsi retirée, juste après l'opération d 'enlèvement, en un emplacement de mesure et on examine la zone d'enlèvement de la surface de l'objet en cet endroit, à l'aide du procédé d'analyse à fluorescence X à réflexion totale, et
c. qu'on répète les étapes opératoires a. et b. en fonction de la gamme de profondeur désirée de l'objet.

2. Procédé selon la revendication 1, caractérisé en ce qu'au moins l'opération d'enlèvement selon l'étape opératoire a. s'effectue dans un volume dans lequel le vide est établi.

3. Procédé selon l'une des revendications 1 ou 2 ou ces deux revendications, caractérisé en ce que ce procédé se déroule dans un volume, dans lequel le vide est établi jusqu'à 10⁻⁵ bar.

4. Procédé selon une ou plusieurs des revendications 1 à 3, caractérisé en ce que l'intervalle de temps pour l'étape opératoire a. et l'étape opératoire b. est prédéterminé et réglable.

5. Dispositif (10) pour l'analyse et la détermination de la concentration d'éléments dans la zone superficielle d'objets essentiellement plats (11) à l'aide d'un spectroscope d'analyse à fluorescence X à réflexion totale (16), pour la mise en oeuvre du procédé selon la revendication 1, caractérisé par un dispositif (12) pour pulvériser ou évaporer (dispositif d'enlèvement) le matériau (13) de l'objet (11), couche par couche, et par le spectromètre d'analyse à fluorescence X à réflexion totale (16) disposé au niveau de l'emplacement de mesure en étant directement voisin du dispositif d'enlèvement (12) à une distance (17), la partie, enlevée sous la forme d'une couche, de l'objet (11) pouvant être examinée de manière répétée après qu'elle a été amenée à l'emplacement de mesure (14).

6. Dispositif selon la revendication 5, caractérisé en ce que le processus, déclenché par le dispositif d'enlèvement (12) du matériau (13) de l'objet, peut être commandé de façon qualitative et/ou quantitative par un dispositif à diaphragme (18).

7. Dispositif selon l'une des revendications 5 ou 6 ou selon ces deux revendications, caractérisé en ce qu'au moins le dispositif d'enlèvement (12) comporte un volume, dans lequel un vide peut être établi et qui loge l'objet (11) pendant l'opération d'enlèvement.

8. Dispositif selon une ou plusieurs des revendications 5 à 7, caractérisé en ce que le déplacement de l'objet (11) entre l'emplacement de mesure (14) et l'emplacement d'enlèvement (15) s'effectue d'une manière entraînée et commandée.
